# EUROPEAN PATENT APPLICATION

(11) **EP 1 930 234 A2**
(43) Date of publication of application: **11.06.2008**
(21) Application number: 07122393.7
(22) Date of filing: 05.12.2007
(51) Int. Cl.: B62K 25/24, B62K 25/26, B62K 25/28, B60G 17/016, B60G 17/017, B62K 11/04

(54) **Motorcycle with air suspensions**

(30) Priority: 05.12.2006 IT BO20060828
(71) Applicant: I-TEA S.r.l., 20123 Milano (IT)
(72) Inventor: Calzavara, Dario, 42100 Reggio Emilia (IT); Pezzola, Marco, 42100 Reggio Emilia (IT)
(74) Representative: Jorio, Paolo

(57) **Abstract**

A motorcycle (1) having: a front wheel (2); a rear wheel (3); a frame (4); an engine (5); a front suspension (6) connecting the front wheel (2) to the frame (4), and having a front air spring (7); a rear suspension (8) connecting the rear wheel (3) to the frame (4), and having a rear air spring; a first sensor fitted to the front air spring (7); a second sensor fitted to the rear air spring (9); an electronically controlled pneumatic circuit for regulating the pressure of the air springs (7); and a control unit which, when the stationary motorcycle (1) passes from the no-load to the loaded condition, is adapted to acquire the negative excursion of the air springs (7) by means of the first and second sensor, is adapted to determine an optimum pressure of the air springs (7) as a function of the negative excursion of the air springs (7), and is adapted to drive the pneumatic circuit to apply the optimum pressure to the air springs (7).

## Description

### TECHNICAL FIELD

The present invention relates to a motorcycle with air suspensions.

### BACKGROUND ART

A motorcycle comprises a front wheel; a rear wheel; a frame (possibly also comprising part of the engine block, in the case of a load-bearing engine); a front suspension connecting the front wheel to the frame, and comprising at least one front spring and a front shock absorber; and a rear suspension connecting the rear wheel to the frame, and comprising at least one rear spring and a rear shock absorber. In almost all currently marketed motorcycles, the front suspension comprises a telescopic fork housing two mechanical front springs and two front hydraulic or air shock absorbers, and the rear suspension comprises an oscillating beam with one mechanical rear spring and one rear hydraulic or air shock absorber.

Some designs (as described, for example, in Patents US4744579, US4638881, US5050699, US4756379, US4723621, US4700799, US4650027 and US5361864) have been proposed, in which the front suspension, as opposed to a fork, comprises one mechanical front spring and one front hydraulic or air shock absorber.

Air, as opposed to mechanical, springs have also been proposed for motorcycle suspensions.

In currently marketed top-range motorcycles, the suspensions are widely adjustable to achieve the best riding position and adapt the dynamic performance of the vehicle to the user's physical characteristics and riding style. In currently marketed top-range motorcycles, however, adjusting the suspensions to achieve the best riding position is a fairly painstaking job (i.e. calls for a good deal of mechanical skill) and, above all, is extremely complicated (i.e. calls for a thorough understanding of the dynamic performance of the vehicle in all operating conditions) and tricky (i.e. may render the vehicle unsafe and therefore highly dangerous in extreme operating conditions).

### DISCLOSURE OF THE INVENTION

It is an object of the present invention to provide a motorcycle with air suspensions, designed to eliminate the aforementioned drawbacks, and which, at the same time, is cheap and easy to produce.

According to the present invention, there is provided a motorcycle with air suspensions, as claimed in the accompanying Claims.

### BRIEF DESCRIPTION OF THE DRAWINGS

A non-limiting embodiment of the present invention will be described by way of example with reference to the accompanying drawings, in which:
Figure 1 shows, schematically, a motorcycle with air suspensions, in accordance with the present invention;
Figure 2 shows a schematic exploded view of the Figure 1 motorcycle suspensions;
Figure 3 shows a larger-scale view of a detail in Figure 2;
Figure 4 shows a diagram of an electronically controlled pneumatic circuit of the Figure 2 suspensions;
Figures 5 and 6 show two examples of graphs stored in a memory of a control device of the Figure 2 suspensions.

### PREFERRED EMBODIMENTS OF THE INVENTION

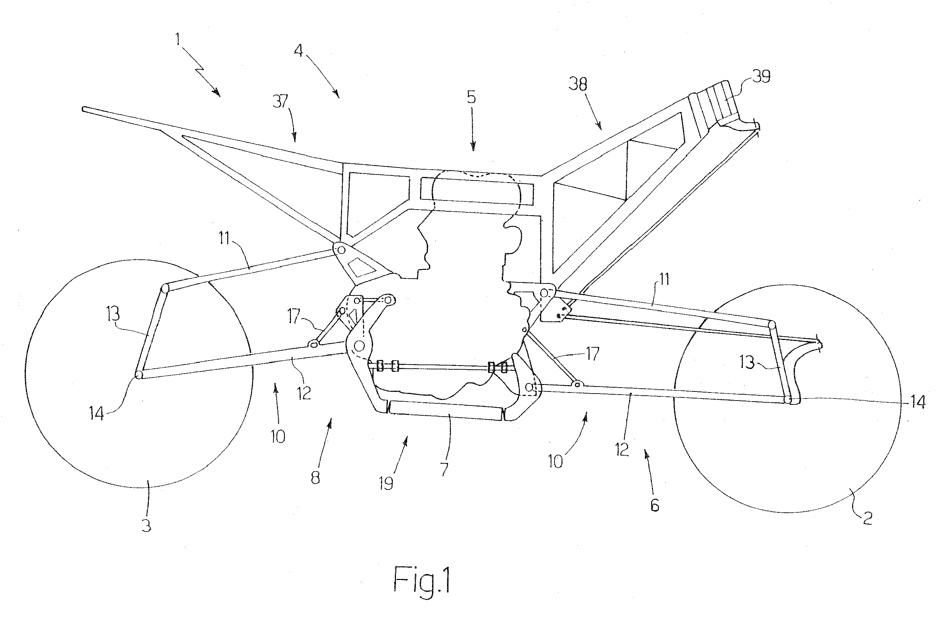

Number 1 in Figure 1 indicates as a whole a motorcycle comprising a front wheel 2 and rear wheel 3 connected to a frame 4. Motorcycle 1 is powered by an internal combustion engine 5, which, in the embodiment shown in the drawings, is, for example, a one-cylinder engine.

Front wheel 2 is connected to frame 4 by a front suspension 6 with a front air spring 7; and rear wheel 3 is connected to frame 4 by a rear suspension 8 with a rear air spring 9. The elastic characteristics of air springs 7 and 9 are adjustable by adjusting the internal pressure of air springs 7 and 9.

In one possible embodiment, each air spring 7, 9 is connected to a respective external damping device (not shown) to achieve a damping effect. Alternatively, each air spring 7, 9 has built-in dissipating members to achieve a damping effect, e.g. laminated valves (possibly controlled electrically) housed inside respective air spring 7, 9.

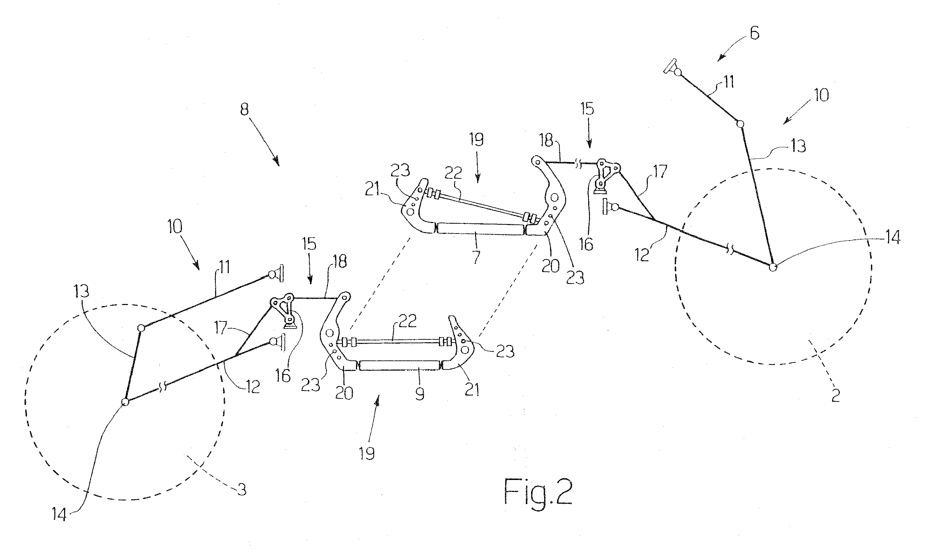

As shown in Figures 1 and 2, each suspension 6, 8 comprises at least one articulated quadrilateral 10 having two cranks 11, 12 (a top crank 11 and bottom crank 12) hinged to frame 4, and a connecting rod 13 hinged to both cranks 11 and 12. Rear suspension 8 normally comprises one asymmetrical articulated quadrilateral 10, while front suspension 6 may comprise either one asymmetrical articulated quadrilateral 10, or two articulated quadrilaterals 10 located symmetrically on opposite sides of front wheel 2.

Each articulated quadrilateral 10 comprises a supporting seat 14 for supporting wheel 2, 3, and located at the hinge between bottom crank 12 and connecting rod 13; and a transmission lever mechanism 15 connecting an intermediate point of bottom crank 12 to respective air spring 7, 9. More specifically, each transmission lever mechanism 15 comprises a rotary transmission member 16 hinged to frame 4; a transmission push rod 17 connecting an intermediate point of bottom crank 12 to transmission member 16; and a transmission push rod 18 connecting transmission member 16 to respective air spring 7, 9.

Each air spring 7, 9 is activated by transmission lever mechanism 15 via a double-acting-tie rocker arm system 19. Each double-acting-tie rocker arm system 19 comprises a rocker arm 20 hinged to frame 4 and having a first end hinged to push rod 18, and a second end opposite the first end and hinged to respective air spring 7, 9; a rocker arm 21 hinged to frame 4 and having a free first end, and a second end opposite the first end and hinged to respective air spring 7, 9; and a tie 22 hinged at one end to rocker arm 20, and at the opposite end to rocker arm 21, so that rotation of rocker arm 20 in one direction corresponds to rotation of rocker arm 21 in the opposite direction. Each tie 22 preferably comprises two ends with spherical articulated joints.

Each transmission push rod 17 is hinged at one end to an intermediate point of bottom crank 12, and at the opposite end to rotary transmission member 16; and each transmission push rod 18 is hinged at one end to rotary transmission member 16, and at the opposite end to rocker arm 20.

It is important to note that, in the event suspension 6, 8 has two articulated quadrilaterals 10 on opposite sides of wheel 2, 3, the two push rods 17 act on the same, i.e. a single, rotary transmission member 16; and a single transmission lever mechanism 15 and single double-acting-tie rocker arm system 19 are therefore also provided, even in the case of two articulated quadrilaterals 10.

The two air springs 7 and 9 are preferably positioned parallel and side by side, and housed underneath engine 5 for easy access. This arrangement also lowers the centre of gravity of motorcycle 1, and reduces roll, thus making the vehicle much easier to ride and manoeuvre.

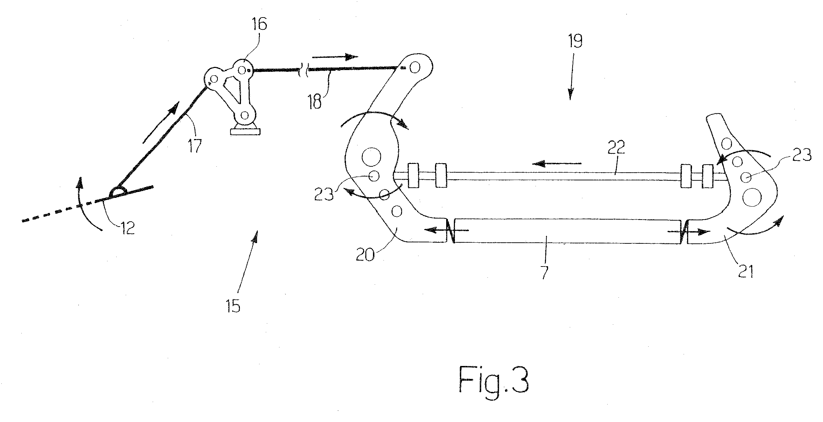

Figure 3 shows operation of rear suspension 8 : if rear wheel 3 moves up (e.g. when accelerating, by centrifugal acceleration pushing motorcycle 1 down when cornering, or on encountering a bump in the road), top crank 11 rotates upwards (clockwise) with respect to frame 4; this is transmitted by transmission lever mechanism 15 (in this case, rotary transmission member 16 rotating clockwise with respect to frame 4) to double-acting-tie rocker arm system 19; rocker arm 20 therefore rotates clockwise, and, by means of tie 22, rotates rocker arm 21 anticlockwise, thus expanding rear air spring 9. Front suspension 6 operates in exactly the same way as rear suspension 8, and therefore needs no explanation.

In a preferred embodiment, each rocker arm 20, 21 comprises a number of seats 23 in which to hinge tie 22, and tie 22 is adjustable in length, so the geometry of suspensions 6 and 8 can be adjusted quickly and easily by altering the seating of respective ties 22 in seats 23. It is important to note that this can be done without changing any of the existing parts, and with no difficulty, even by an inexperienced user, by virtue of the accessible location of ties 22.

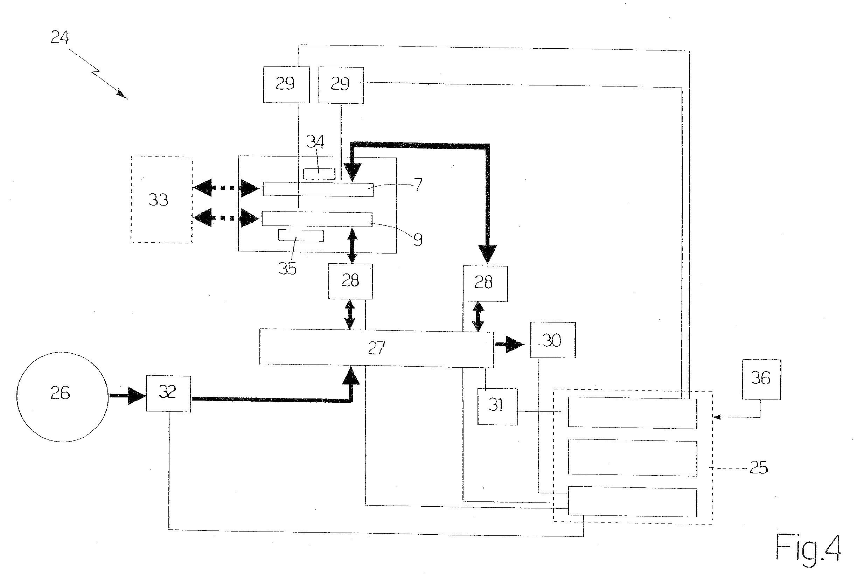

As shown in Figure 4, air springs 7 and 9 are connected to an electronically controlled pneumatic circuit 24, which regulates the pressure of air springs 7 and 9, and has an electronic control unit 25. Pneumatic circuit 24 comprises a displacement compressor 26 activated directly by a drive shaft of engine 5; a tank 27 pressurized by displacement compressor 26; two solenoid regulating valves 28, each connecting a respective air spring 7, 9 to tank 27 or to the atmosphere; and two pressure sensors 29, each for measuring the pressure of a respective air spring 7, 9.

Pneumatic circuit 24 also comprises a solenoid exhaust valve 30 for connecting tank 27 to the atmosphere; and a further pressure sensor 31 for measuring the pressure of tank 27.

In a preferred embodiment, displacement compressor 26 is activated by the drive shaft of engine 5 via a gear transmission (not shown), and comprises a lobed displacement pump that provides small work fluid flows at high delivery pressures. A rotor of displacement compressor 26 is connected permanently to the drive shaft of engine 5; and a solenoid relief valve 32 is interposed between displacement compressor 26 and tank 27 to connect the delivery of displacement compressor 26 to tank 27 or to the atmosphere.

It is important to note that displacement compressor 26 is always on, but only performs significant work (i.e. absorbs other than negligible mechanical power) when the delivery of displacement compressor 26 is connected to tank 27 by solenoid relief valve 32. Conversely, when solenoid relief valve 32 connects the delivery of displacement compressor 26 to the atmosphere, the difference in pressure between the intake and delivery of displacement compressor 26 is zero, so displacement compressor 26 performs no significant work (i.e. absorbs negligible mechanical power due solely to very low internal friction).

In actual use, control unit 25 uses pressure sensor 31 to feedback monitor the pressure in tank 27. If the pressure in tank 27 is above the desired value, control unit 25 activates solenoid exhaust valve 30 to connect tank 27 to the atmosphere; and, if the pressure in tank 27 is below the desired value, control unit 25 activates solenoid relief valve 32 to connect tank 27 to the delivery of displacement compressor 26.

Control unit 25 uses pressure sensors 29 to feedback monitor the pressure in air springs 7 and 9. If the pressure in air spring 7 or 9 is above the desired value, control unit 25 activates the respective solenoid regulating valve 28 to connect spring 7 or 9 to the atmosphere; and, if the pressure in air spring 7 or 9 is below the desired value, control unit 25 activates the respective solenoid regulating valve 28 to connect air spring 7 or 9 to tank 27.

In one possible embodiment, pneumatic circuit 24 may also comprise a solenoid bypass valve 33 to connect air springs 7 and 9.

Control unit 25 is also connected to a linear sensor 34 fitted to front air spring 7 to directly measure the actual length of front air spring 7, and to a linear sensor 35 fitted to rear air spring 9 to directly measure the actual length of rear air spring 9. In a different embodiment, linear sensors 34 and 35 may be eliminated, and their function performed by pressure sensors 29, which determine the actual length of air springs 7 and 9 indirectly as a function of the actual pressure in air springs 7 and 9. This embodiment, however, is inevitably less accurate in determining the actual length of air springs 7 and 9.

In actual use, when the stationary motorcycle 1 passes from the no-load to the loaded condition (i.e. normally when mounted by the rider and passenger, if any), control unit 25 acquires the negative excursion (i.e. compression) of air springs 7 and 9 by means of linear sensors 34 and 35; determines the load on motorcycle 1 (i.e. the weight of the rider, the passenger, if any, and any luggage) as a function of the negative excursion of air springs 7 and 9; determines an optimum pressure of air springs 7 and 9 as a function of the load on motorcycle 1; and controls pneumatic circuit 24 to apply the optimum pressure to air springs 7 and 9.

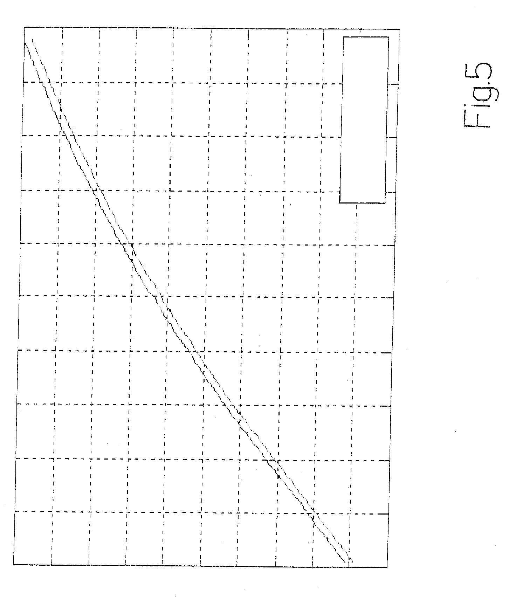

In a preferred embodiment, a memory of control unit 25 stores at least one curve (an example of which is shown schematically in the Figure 5 graph), which gives the optimum pressure of air spring 7 or 9 (y axis) as a function of the negative excursion (x axis) of air spring 7 or 9. The curve is determined at the design and set-up stage of motorcycle 1, and is first calculated theoretically, and later refined on the basis of tests. In this case, control unit 25 does not actually determine the load on motorcycle 1, this being incorporated in the curve, stored in control unit 25, giving the optimum pressure of air springs 7 and 9 as a function of the negative excursion of air springs 7 and 9. One curve may obviously be provided for front air spring 7, and another for rear air spring 9.

It is important to note that, a motorcycle being a dynamic system in which the mass of the rider is comparable with the mass of the motorcycle, it is impossible to determine beforehand (i.e. at the design stage) an absolute optimum configuration of suspensions 6 and 8 regardless of the actual load on motorcycle 1. By means of the above control method, however, the pressure of air springs 7 and 9 can be adapted to the actual load to achieve the optimum configuration of suspensions 6 and 8 in any load condition.

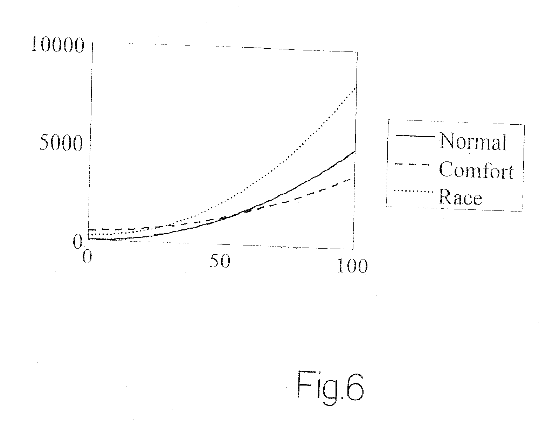

In a preferred embodiment shown schematically in Figure 4, a selector device 36 is connected to control unit 25 to enable the rider to select from a number of alternative response modes of air springs 7 and 9. In other words, selector device 36 comprises a switch or push-button panel by which to select a race mode, a comfort mode, or an intermediate or normal mode. Control unit 25 determines the rider-selected mode setting on selector device 36, and adjusts the optimum pressure of air springs 7 and 9 for a given load on motorcycle 1. For example, a memory of control unit 25 stores a curve (an example of which is shown schematically in the Figure 6 graph), which gives, for the three response modes of air springs 7 and 9, the optimum pressure of air springs 7 and 9 (y axis) as a function of the negative excursion (x axis) of air springs 7 and 9. The curve is determined at the design and set-up stage of motorcycle 1, and is first calculated theoretically, and later refined on the basis of tests.

In one possible embodiment, when the motorcycle is running, control unit 25 determines the excursions of air springs 7 and 9 by means of linear sensors 34 and 35, determines riding conditions as a function of the excursions of air springs 7 and 9, and adjusts the pressure of air springs 7 and 9 as a function of the riding conditions. In other words, control unit 25 actively controls air springs 7 and 9 to adapt response of air springs 7 and 9 to the riding condition. For example, on determining (e.g. by means of linear sensors 34 and 35) maximum excursion of one of air springs 7 and 9, control unit 25 may opt to increase the internal pressure of (i.e. stiffen) the air spring 7, 9 in question. It is important to note that adjustments by control unit 25 to the internal pressure of air springs 7 and 9 must always be made gradually, to avoid confusing the rider.

In a preferred embodiment shown in Figure 1, engine 5 is load-bearing and forms an integral part of frame 4. More specifically, suspensions 6 and 8 are connected directly to engine 5, and frame 4 comprises a bracket 37 supported by engine 5 and fitted with a saddle (not shown); and a bracket 38 supported by engine 5 and in turn supporting a supporting member 39 for a handlebar (not shown).

The innovative suspensions 6 and 8 described above provide for a high degree of integration of frame 4 and engine 5. The structural parts of suspensions 6 and 8, in fact, converge at points on engine 5 specially designed for the purpose. Having to support both the static loads exerted by the weight of motorcycle 1 itself, and the dynamic loads exerted when motorcycle 1 is running, engine 5 performs an even more important role in motorcycle 1 as a whole. That is, engine 5 not only provides the necessary power to drive the motorcycle, but also acts as a frame to support itself and motorcycle 1 as a whole. A one-cylinder engine 5 is an excellent solution, by being geometrically and structurally symmetrical and compact. Employing a load-bearing engine 5 specially designed for motorcycle 1 provides for further reducing the overall mass (by as much as roughly 5 to 15%).

In motorcycle 1 described above, the conventional telescopic fork is eliminated in favour of an articulated antidive quadrilateral 10 with adjustable-length connecting rod-crank members and an articulated lever steering system. The handlebar, no longer being connected directly to the unsuspended mass by rods and cover tubes, but indirectly by the articulated transmission system, is mechanically suspended to greatly improve riding comfort. Performance of the articulated quadrilateral arrangement ensures maintenance of characteristic hub angles with respect to the ground (i.e. provides for an antidive front suspension 6), thus greatly improving bump road holding ability. The same technology is also applied to rear suspension 8, using an asymmetrical one-arm articulated quadrilateral 10, or two symmetrical articulated quadrilaterals 10; the aim being the same as for front suspension 6, i.e. to ensure antidive performance.

Motorcycle 1 as described above has numerous advantages. In particular, it has a high degree of passive safety, and is extremely easy to drive, by virtue of the articulated linkage system of suspensions 6 and 8; and the characteristic hub angles with respect to the ground remain more or less unchanged (antidive function) to ensure maximum safety when braking or turning.

Moreover, the geometry of suspensions 6 and 8 is easily adjustable by simply altering the seating of ties 22 in seats 23.

It is important to note that suspensions 6 and 8 are designed to ensure nonlinear performance, which in fact is what determines the progressivity demanded of a motorcycle suspension, i.e. increasing stiffness of the suspension alongside an increase in stress. In practical terms, a progressive suspension, i.e. characterized by nonlinear geometric-structural elements, is capable of performing satisfactorily regardless of the loads applied.

## Claims

1. A motorcycle (1) comprising:
a front wheel (2);
a rear wheel (3);
a frame (4);
an engine (5);
a front suspension (6) connecting the front wheel (2) to the frame (4), and comprising a front air spring (7); and
a rear suspension (8) connecting the rear wheel (3) to the frame (4), and comprising a rear air spring (9);
the motorcycle (1) being **characterized by** comprising:
a first sensor (34) fitted to the front air spring (7);
a second sensor (35) fitted to the rear air spring (9);
an electronically controlled pneumatic circuit (24) for regulating the pressure of the air springs (7, 9); and
a control unit (25) which, when the stationary motorcycle (1) passes from the no-load to the loaded condition, acquires the negative excursion of the air springs (7, 9) by means of the first and second sensor (34, 35), determines an optimum pressure of the air springs (7, 9) as a function of the negative excursion of the air springs (7, 9), and drives the pneumatic circuit (24) to apply the optimum pressure to the air springs (7, 9).

2. A motorcycle (1) as claimed in Claim 1, wherein a memory of the control unit (25) stores at least one curve giving the optimum pressure of the air springs (7, 9) as a function of the negative excursion of the air springs (7, 9).

3. A motorcycle (1) as claimed in Claim 1 or 2, and comprising a selector device (36) enabling the rider to select from a number of alternative response modes of the air springs (7, 9); the control unit (25) acquires the rider-selected setting of the selector device (36), and adjusts the optimum pressure of the air springs (7, 9) for a given load on the motorcycle (1).

4. A motorcycle (1) as claimed in Claim 3, wherein the selector device (36) comprises at least a race mode and a comfort mode.

5. A motorcycle (1) as claimed in Claim 4, wherein the selector device (36) comprises a race mode, a comfort mode, and an intermediate or normal mode.

6. A motorcycle (1) as claimed in one of Claims 1 to 5, wherein, when the motorcycle is running, the control unit (25) determines the excursions of the air springs (7, 9) by means of the first and second sensor (34, 35) of the two air springs (7, 9), determines riding conditions as a function of the excursions of the air springs (7, 9), and adjusts the pressure of the two air springs (7, 9) as a function of riding conditions.

7. A motorcycle (1) as claimed in one of Claims 1 to 6, wherein the first sensor (34) and the second sensor (35) are linear sensors, and determine the actual length of the respective air springs (7, 9).

8. A motorcycle (1) as claimed in one of Claims 1 to 7, wherein the pneumatic circuit (24) comprises:
a displacement compressor (26) activated by a drive shaft of the engine (5);
a tank (27) pressurized by the displacement compressor (26);
two solenoid regulating valves (28), each connecting a respective air spring (7; 9) to the tank (27) or to the atmosphere; and
two pressure sensors (29), each for measuring the pressure of a respective air spring (7; 9).

9. A motorcycle (1) as claimed in Claim 8, wherein the pneumatic circuit (24) comprises a solenoid exhaust valve (30) connecting the tank (27) to the atmosphere.

10. A motorcycle (1) as claimed in Claim 8 or 9, wherein the pneumatic circuit (24) comprises a further pressure sensor (31) for measuring the pressure of the tank (27).

11. A motorcycle (1) as claimed in Claim 8, 9 or 10, wherein a rotor of the displacement compressor (26) is connected permanently to the drive shaft of the engine (5); and a solenoid relief valve (32) is interposed between the displacement compressor (26) and the tank (27) to connect the delivery of the displacement compressor (26) to the tank (27) or to the atmosphere.

12. A motorcycle (1) as claimed in one of Claims 8 to 11, wherein the pneumatic circuit (24) comprises a solenoid bypass valve (33) for connecting the two air springs (7, 9).

13. A motorcycle (1) as claimed in one of Claims 1 to 12, wherein each suspension (6; 8) comprises:
at least one articulated quadrilateral (10) having two cranks (11, 12) hinged to the frame (4), and a connecting rod (13);
a supporting seat (14) for supporting the wheel (2; 3), and located at the hinge between a bottom crank (12) and the connecting rod (13); and
a transmission lever mechanism (15) connecting an intermediate point of the bottom crank (12) to the respective air spring (7; 9).

14. A motorcycle (1) as claimed in Claim 13, wherein the transmission lever mechanism (15) of each suspension comprises:
a rotary transmission member (16) hinged to the frame (4);
a first transmission push rod (17) connecting an intermediate point of the bottom crank (12) to the transmission member (16); and
a second transmission push rod (18) connecting the transmission member (16) to the respective air spring (7; 9).

15. A motorcycle (1) as claimed in Claim 14, wherein each first transmission push rod (17) is hinged at one end to an intermediate point of the bottom crank (12), and at the opposite end to the transmission member (16).

16. A motorcycle (1) as claimed in Claim 14 or 15, wherein each air spring (7; 9) is activated by the transmission lever mechanism (15) via a double-acting-tie rocker arm system (19).

17. A motorcycle (1) as claimed in Claim 16, wherein the double-acting-tie rocker arm system (19) comprises:
a first rocker arm (20) hinged to the frame (4), and having a first end hinged to the second transmission push rod (18), and a second end opposite the first end and hinged to the respective air spring (7; 9);
a second rocker arm (21) hinged to the frame (4), and having a free first end, and a second end opposite the first end and hinged to the respective air spring (7; 9); and
a tie (22) hinged at one end to the first rocker arm (20), and at the opposite end to the second rocker arm (21), so that rotation of the first rocker arm (20) in one direction corresponds to rotation of the second rocker arm (21) in the opposite direction.

18. A motorcycle (1) as claimed in Claim 17, wherein each rocker arm has a number of seats (23) in which to hinge the tie (22); and the tie (22) is adjustable in length.

19. A motorcycle (1) as claimed in Claim 18, wherein each tie (22) comprises two ends with spherical articulated joints.

20. A motorcycle (1) as claimed in one of Claims 1 to 19, wherein each air spring (7; 9) is connected to an external damping device to achieve a shock absorbing effect.

21. A motorcycle (1) as claimed in one of Claims 1 to 19, wherein each air spring (7; 9) incorporates dissipating members to achieve a shock absorbing effect.

22. A motorcycle (1) as claimed in Claim 21, wherein the dissipating members are defined by laminated valves housed in the respective air spring (7; 9).

23. A motorcycle (1) as claimed in Claim 22, wherein the laminated valves are controlled electrically.

24. A motorcycle (1) as claimed in one of Claims 1 to 23, wherein the two air springs (7, 9) are located parallel and side by side, and are housed underneath the engine (5).

25. A motorcycle (1) as claimed in one of Claims 1 to 24, wherein the engine (5) is load-bearing, and forms an integral part of the frame (4).

26. A motorcycle (1) as claimed in Claim 25, wherein the suspensions (6, 8) are connected directly to the engine (5).

27. A motorcycle (1) as claimed in Claim 26, wherein the frame (4) comprises a first bracket (37) supported by the engine (5) and supporting a saddle; and a second bracket (38) supported by the engine (5) and in turn supporting a supporting member (39) for a handlebar.

28. A motorcycle (1) comprising:
a front wheel (2);
a rear wheel (3);
a frame (4);
an engine (5);
a front suspension (6) connecting the front wheel (2) to the frame (4), and comprising at least a front spring (7); and
a rear suspension (8) connecting the rear wheel (3) to the frame (4), and comprising at least a rear spring (9) ;
the motorcycle (1) being **characterized in that** at least one suspension (6; 8) comprises:
at least one articulated quadrilateral (10) having two cranks (11, 12) hinged to the frame (4), and a connecting rod (13);
a supporting seat (14) for supporting the wheel (2; 3), and located at the hinge between a bottom crank (12) and the connecting rod (13); and
a transmission lever mechanism (15) connecting an intermediate point of the bottom crank (12) to the respective spring (7; 9).

29. A motorcycle (1) as claimed in Claim 28, wherein the transmission lever mechanism (15) :
a rotary transmission member (16) hinged to the frame (4);
a first transmission push rod (17) connecting an intermediate point of the bottom crank (12) to the transmission member (16); and
a second transmission push rod (18) connecting the transmission member (16) to the respective spring (7; 9).

30. A motorcycle (1) as claimed in Claim 29, wherein each first transmission push rod (17) is hinged at one end to an intermediate point of the bottom crank (12), and at the opposite end to the transmission member (16).

31. A motorcycle (1) as claimed in Claim 29 or 30, wherein the spring (7; 9) is activated by the transmission lever mechanism (15) via a double-acting-tie rocker arm system (19).

32. A motorcycle (1) as claimed in Claim 31, wherein the double-acting-tie rocker arm system (19) comprises:
a first rocker arm (20) hinged to the frame (4), and having a first end hinged to the second transmission push rod (18), and a second end opposite the first end and hinged to the respective spring (7; 9);
a second rocker arm (21) hinged to the frame (4), and having a free first end, and a second end opposite the first end and hinged to the respective spring (7; 9); and
a tie (22) hinged at one end to the first rocker arm (20), and at the opposite end to the second rocker arm (21), so that rotation of the first rocker arm (20) in one direction corresponds to rotation of the second rocker arm (21) in the opposite direction.

33. A motorcycle (1) as claimed in Claim 32, wherein each rocker arm has a number of seats (23) in which to hinge the tie (22); and the tie (22) is adjustable in length.

34. A motorcycle (1) as claimed in Claim 33, wherein each tie (22) comprises two ends with spherical articulated joints.

35. A motorcycle (1) as claimed in one of Claims 28 to 34, wherein each suspension (6; 8) comprises at least one respective articulated quadrilateral (10).

36. A motorcycle (1) as claimed in Claim 35, wherein the two springs (7, 9) are located parallel and side by side, and are housed underneath the engine (5).

37. A motorcycle (1) as claimed in Claim 35 or 36, wherein the engine (5) is load-bearing, and forms an integral part of the frame (4).

38. A motorcycle (1) as claimed in Claim 37, wherein the suspensions (6, 8) are connected directly to the engine (5).

39. A motorcycle (1) as claimed in Claim 38, wherein the frame (4) comprises a first bracket (37) supported by the engine (5) and supporting a saddle; and a second bracket (38) supported by the engine (5) and in turn supporting a supporting member (39) for a handlebar.

40. A motorcycle (1) comprising:
a front wheel (2);
a rear wheel (3);
a frame (4);
a load-bearing engine (5) forming an integral part of the frame (4);
a front suspension (6) connecting the front wheel (2) to the frame (4), and comprising at least a front spring (7); and
a rear suspension (8) connecting the rear wheel (3) to the frame (4), and comprising at least a rear spring (9);
the motorcycle (1) being **characterized in that** the suspensions (6, 8) are connected directly to the engine (5).

41. A motorcycle (1) as claimed in Claim 40, wherein the frame (4) comprises a first bracket (37) supported by the engine (5) and supporting a saddle; and a second bracket (38) supported by the engine (5) and in turn supporting a supporting member (39) for a handlebar.
